# EUROPÄISCHE PATENTANMELDUNG

(11) **EP 1 586 831 A1**
(43) Veröffentlichungstag der Anmeldung: **19.10.2005**
(21) Anmeldenummer: 04008843.7
(22) Anmeldetag: 14.04.2004
(51) Int. Cl.: F24J 3/08

(54) **Verfahren zur Nutzung von Erdwärme**

(71) Anmelder: ENRO GeothermieEntwicklung GmbH, 14974 Ludwigsfelde (DE)
(72) Erfinder: Bund, Karlheinz Dr., 45133 Essen (DE)
(74) Vertreter: Rohmann, Michael

(57) **Zusammenfassung**

Verfahren zur Nutzung von Erdwärme, insbesondere zur Stromerzeugung, wobei ein Wärmeträgermedium durch eine Mehrzahl von Zuführungsleitungen in das Erdreich eingeführt wird. Jede Zuführungsleitung weist zumindest eine Austrittsöffnung auf und das Wärmeträgermedium tritt über diese Austrittsöffnungen in das Erdreich aus. Das Wärmeträgermedium wird von den Austrittsöffnungen über einen Strömungsabstand s das Erdreich durchdringend zu einer Abführungsöffnung geführt. Das durch die Erdwärme erwärmte Wärmeträgermedium wird über eine an die Abführungsöffnung angeschlossene Förderleitung wieder zur Erdoberfläche zurückgeführt. Die mehreren Zuführungsleitungen bzw. ihre Austrittsöffnungen sind um die Förderleitung bzw. ihre Abführungsöffnung verteilt angeordnet.

## Beschreibung

Die Erfindung betrifft ein Verfahren zur Nutzung von Erdwärme, beispielsweise zur Stromerzeugung. Die Erdwärme kann aber auch für andere Anwendungszwecke ausgenutzt werden. Zum Beispiel kann die Energie aus der Erdwärme an der Erdoberfläche zur Wasserstoffgewinnung verwendet werden.

Aus der Praxis ist es bekannt, zum Zwecke der Nutzung von Erdwärme zwei Bohrungen in das Erdreich bzw. in das Gestein einzubringen. Die erste Bohrung ist für eine Zuführungsleitung für ein Wärmeträgermedium vorgesehen, bei dem es sich in der Regel um Wasser handelt. Die zweite Bohrung steht für eine Förderleitung zum zurückführen des durch die Erdwärme erwärmten Wassers an die Erdoberfläche zur Verfügung. Das durch die erste Bohrung zugeführte Wasser durchströmt in der Tiefe das Erdreich bzw. das Gestein und wird dabei durch die Erdwärme aufgeheizt. Die Abstände der beiden Bohrlöcher betragen beispielsweise zwischen einem und zwei Kilometern. Über das zweite Bohrloch bzw. über die Förderleitung wird das erwärmte Wasser in der Regel mit Hilfe einer Pumpe gefördert. Die Wärme des an die Erdoberfläche beförderten Wassers wird dann normalerweise mit Hilfe eines Wärmetauschers auf einen Kreislauf übertragen, in dem Dampf für die Stromgewinnung erzeugt wird. Das dabei abgekühlte Wasser wird anschließend über das erste Bohrloch wieder in das Erdreich bzw. in das Gestein verpresst. Das bekannte Verfahren ist mit dem Nachteil verbunden, dass die Wärmeausbeute bezüglich der im Erdreich auf das Wärmeträgermedium übertragenen Wärme zu wünschen übrig lässt. Mit anderen Worten ist der Wirkungsgrad im Hinblick auf die Wärmeübertragung nicht zufriedenstellend.

Demgegenüber liegt der Erfindung das technische Problem zugrunde, ein Verfahren der vorstehend genannten Art anzugeben, mit dem auf einfache und effektive Weise Erdwärme in hoher Ausbeute genutzt werden kann, beispielsweise zur Stromerzeugung.

Zur Lösung dieses technischen Problems lehrt die Erfindung ein Verfahren zur Nutzung von Erdwärme, beispielsweise zur Stromerzeugung,
wobei ein Wärmeträgermedium durch eine Mehrzahl von Zuführungsleitungen in das Erdreich eingeführt wird,
wobei jede Zuführungsleitung zumindest eine Austrittsöffnung aufweist und wobei das Wärmeträgermedium über diese Austrittsöffnungen in das Erdreich austritt,
wobei das Wärmeträgermedium von den Austrittsöffnungen über einen Strömungsabstand s das Erdreich durchdringend zu einer Abführungsöffnung geführt wird,
wobei das durch die Erdwärme erwärmte Wärmeträgermedium über eine an die Abführungsöffnung angeschlossene Förderleitung wieder zur Erdoberfläche zurückgeführt wird
und wobei die mehreren Zuführungsleitungen bzw. ihre Austrittsöffnungen um die eine Förderleitung bzw. ihre Abführungsöffnung herum verteilt angeordnet werden.

Wenngleich im Patentanspruch 1 lediglich von einer Abführungsöffnung der Förderleitung die Rede ist, kann die Förderleitung auch mehrere Abführungsöffnungen aufweisen. Es liegt im Übrigen im Rahmen der Erfindung, dass die Zuführungsleitungen und/oder die Förderleitung vertikal bzw. im Wesentlichen vertikal in das Erdreich eingebracht sind.

Erdreich meint im Rahmen der Erfindung vor allem Gestein und insbesondere kristallines Gestein, wie beispielsweise Granit oder Gneise. Mit Erdreich sind aber auch hochpermeable Gesteinsschichten, sogenannte Aquifere gemeint. Der Begriff Erdreich umfasst im Rahmen der Erfindung fernerhin auch sogenannte Störungszonen. Dabei handelt es sich um Bruchzonen oder Bruchflächen, die in Sedimentgestein wie kristallinem Gestein auftreten können. Die Austrittsöffnungen und die Abführungsöffnungen für das Wärmeträgermedium sind zweckmäßigerweise in einer Tiefe von 1500 bis 7000, vorzugsweise von 2000 bis 7000 und bevorzugt von 3000 bis 7000 m angeordnet. Nach einer sehr bevorzugten Ausführungsform der Erfindung sind die Austrittsöffnungen und/oder die Abführungsöffnungen in einer Tiefe von 3500 bis 6000 m vorgesehen.

Zweckmäßigerweise wird ein flüssiges Wärmeträgermedium durch die Zuführungsleitung zugeführt. Nach besonders bevorzugter Ausführungsform der Erfindung wird Wasser als Wärmeträgermedium eingesetzt.

Es liegt im Rahmen der Erfindung, dass mindestens drei, vorzugsweise zumindest vier und besonders bevorzugt zumindest sechs Zuführungsleitungen vorgesehen sind, die um die Förderleitung bzw. um die Abführungsöffnung der Förderleitung verteilt angeordnet sind. Dabei hat jede Zuführungsleitung jeweils zumindest eine Austrittsöffnung. Nach bevorzugter Ausführungsform der Erfindung haben benachbarte Zuführungsleitungen der um die Förderleitung verteilten Zuführungsleitungen jeweils den gleichen Abstand.

Eine sehr bevorzugte Ausführungsform ist dadurch gekennzeichnet, dass zumindest ein Teil der Zuführungsleitungen bzw. ihre Austrittsöffnungen, vorzugsweise alle Zuführungsleitungen bzw. ihre Austrittsöffnungen denselben oder im Wesentlichen denselben Strömungsabstand s zu der Förderleitung bzw. zu ihrer Abführungsöffnung haben. Es liegt im Rahmen der Erfindung, dass eine Austrittsöffnung und eine Abführungsöffnung mit einem gegenseitigen Strömungsabstand s von 200 bis 800 m, vorzugsweise von 300 bis 700 m voneinander angeordnet werden. Zweckmäßigerweise beträgt der Strömungsabstand s zwischen einer Austrittsöffnung und einer Abführungsöffnung 350 bis 650 m, beispielsweise 500 m.

Nach ganz besonders bevorzugter Ausführungsform der Erfindung werden die Leitungen mit der Maßgabe angeordnet, dass die Förderleitung bezüglich einer (gedachten) horizontalen Schnittfläche (Schnittebene) den Mittelpunkt eines mittleren Polygons bildet und wobei zumindest ein Teil der Zuführungsleitungen jeweils den Mittelpunkt eines identischen äußeren Polygons bildet, welches äußere Polygon an das mittlere Polygon unmittelbar angrenzt bzw. anschließt. Die (gedachten) Polygone liegen also in der horizontalen Schnittfläche/Schnittebene und sind in der Draufsicht auf die Schnittfläche/Schnittebene erkennbar. Bei dem Polygon handelt es sich um ein Vieleck mit mindestens drei Seiten und vorzugsweise mit mehr als drei Seiten. Identisches äußeres Polygon meint, dass ein äußeres Polygon im Hinblick auf die Eckenanzahl, die Seitenanzahl und die Fläche mit dem mittleren Polygon übereinstimmt. Vorzugsweise bildet jede der um eine Förderleitung herum angeordneten Zuführungsleitungen den Mittelpunkt eines äußeren Polygons, dass mit dem mittleren Polygon (mit der Förderleitung) identisch ist und an das mittlere Polygon unmittelbar angrenzt. Es liegt im Rahmen der Erfindung, dass das mittlere Polygon von den äußeren Polygonen vollständig umgeben bzw. umschlossen wird. Es handelt sich dabei also um an das mittlere Polygon allseitig angrenzende äußere Polygone. Nach besonders bevorzugter Ausführungsform der Erfindung ist das mittlere Polygon ein Sechseck und sind auch die äußeren Polygone Sechsecke. Dass eine Leitung bzw. eine Öffnung im Mittelpunkt eines Polygons liegt meint im Rahmen der Erfindung auch, dass die Leitung bzw. Öffnung ungefähr bzw. in etwa im Mittelpunkt des Polygons angeordnet ist.

Nach einer Ausführungsform der Erfindung ist der Innendurchmesser der Förderleitung größer als der Innendurchmesser einer Zuführungsleitung. Es liegt aber auch im Rahmen der Erfindung, dass der Innendurchmesser der Förderleitung gleich oder kleiner ist als der Innendurchmesser einer Zuführungsleitung. Dann wird das von den Zuführungsleitungen zufließende und im Erdreich erwärmte Wärmeträgermedium zweckmäßigerweise mit einer entsprechend hohen Förderleistung bzw. Pumpleistung durch die Förderleitung an die Erdoberfläche befördert. Zweckmäßigerweise wird das Verfahren so geführt, dass das von einer Zuführungsleitung zugeführte Wärmeträgermedium das Erdreich in der Nähe der Austrittsöffnung zunächst langsamer durchströmt und dass dann die Strömungsgeschwindigkeit zur Mitte bzw. zur Förderleitung hin größer wird. Vorzugsweise findet eine kontinuierliche Erhöhung der Strömungsgeschwindigkeit des Wärmeträgermediums von einer Austrittsöffnung zu der Abführungsöffnung hin statt. Um die vorstehend erläuterten Strömungsgeschwindigkeiten zu realisieren, wird insbesondere der Innendurchmesser der Zuführungsleitungen und/oder der Innendurchmesser der Förderleitung und/oder der durch jede Zuführungsleitung zugeführte Volumenstrom und/oder der durch die Förderleitung abgeführte Volumenstrom und/oder die Zuführungsförderleitung bzw. Pumpleistung einer Zuführungsleitung und/oder die Abführungsförderleistung bzw. Pumpleistung einer Förderleitung entsprechend eingestellt.

Eine ganz besonders bevorzugte Ausführungsform, der im Rahmen der Erfindung besondere Bedeutung zukommt ist dadurch gekennzeichnet, dass die Abführungsöffnung der Förderleitung auf einem tieferem Niveau im Erdreich angeordnet ist als die Austrittsöffnungen der Zuführungsleitungen. Vorzugsweise ist eine Abführungsöffnung um eine Tiefendifferenz Δt tiefer als eine Austrittsöffnung angeordnet, welche Tiefendifferenz Δt zumindest 1/20, vorzugsweise zumindest 1/15 und bevorzugt zumindest 1/10 des Strömungsabstandes s beträgt.

Es liegt im Rahmen der Erfindung, dass das Erdreich zwischen den Austrittsöffnungen und der Abführungsöffnung zur Erzeugung von Strömungskanälen für das Wärmeträgermedium künstlich aufgebrochen wird. Durch dieses künstliche Aufbrechen werden neue Hohlräume (Risse, Rissflächen, Klüfte, Poren und dergleichen) im Erdreich geschaffen bzw. bestehende Hohlräume erweitert, so dass Strömungskanäle zur Verfügung stehen, durch die das Wärmeträgermedium von den Austrittsöffnungen zu der Abführungsöffnung strömen kann. Ein solches künstliches Aufbrechen findet insbesondere statt, wenn es sich bei dem Erdreich um Gestein bzw. kristallines Gestein handelt. Das künstliche Aufbrechen dieses kristallinen Gesteins ist auch unter der Bezeichnung "Hot-Dry-Rock-Verfahren" (HDR-Verfahren) bekannt. Zweckmäßigerweise wird im Rahmen der Erfindung zum künstlichen Aufbrechen des Erdreichs bzw. des Gesteins das an sich bekannte sogenannte "Hydraulic-Fracturing-Verfahren" angewendet. Dabei wird eine Flüssigkeit, vorzugsweise Wasser unter hohem Druck in das Erdreich bzw. in das Gestein verpresst. Durch diesen hohen Druck und die im Gestein herrschenden Spannungen können dann Risse bzw. Rissflächen erzeugt werden oder aber bestehende Risse bzw. Rissflächen aufgeweitet werden. Durch das künstliche Aufbrechen des Erdreiches bzw. des Gesteins wird die hydraulische Durchlässigkeit des Erdreichs erhöht. Dadurch kann die Fließrate des Wärmeträgermediums über den Strömungsabstand s zwischen einer Austrittsöffnung und einer Abführungsöffnung gesteigert werden. Das erfindungsgemäße Verfahren wird bevorzugt mit der Maßgabe durchgeführt, dass über den Strömungsabstand s zwischen einer Austrittsöffnung und einer Abführungsöffnung eine Mindestfließrate von 50 m³/h verwirklicht werden kann.

Es wurde bereits oben erwähnt, dass nach einer besonders bevorzugten Ausführungsform der Erfindung eine Abführungsöffnung um eine Tiefendifferenz Δt tiefer angeordnet ist als die Austrittsöffnungen. Auf diese Weise kann eine besonders vorteilhafte Strömung mit effektivem Wärmeaustausch verwirklicht werden. Nach einer Ausführungsform der Erfindung liegt eine Abführungsöffnung bei einem Strömungsabstand s von 200 bis 800 m vorzugsweise mindest 20 m tiefer, bevorzugt mindestens 50 m tiefer als die Austrittsöffnungen.

Vorzugsweise wird das Wärmeträgermedium mit zumindest einer Fördereinrichtung in eine Zuführungsleitung eingepresst bzw. eingedrückt und/oder wird das Wärmeträgermedium mit zumindest einer Fördereinrichtung über die Förderleitung wieder an die Erdoberfläche befördert. Bei einer Fördereinrichtung handelt es sich zweckmäßigerweise um eine geeignete Pumpe.

Das aufgewärmte bzw. aufgeheizte Wärmeträgermedium wird an der Erdoberfläche nach sehr bevorzugter Ausführungsform der Erfindung zur Stromerzeugung bzw. zur Gewinnung von elektrischer Energie verwendet. Dabei wird die von dem Wärmeträgermedium beförderte Wärmeenergie in mechanische Energie umgewandelt. Dazu wird zweckmäßigerweise Dampf bei hoher Temperatur und hohem Druck über zumindest eine Turbine geleitet. Dabei wird der Dampf abgekühlt und entspannt. Die Turbine treibt einen Generator an, mit dem die mechanische Energie in elektrische Energie umgewandelt wird. Nach einer Ausführungsform der Erfindung wird für das Medium, das dampfförmig eine Turbine antreiben soll, ein Medium eingesetzt, das einen geringeren Siedepunkt als Wasser hat. Vorzugsweise handelt es sich bei diesem Medium um eine organische Flüssigkeit mit niedrigerem Siedepunkt als Wasser, beispielsweise um einen Kohlenwasserstoff wie n-Pentan oder Isobutan. Zweckmäßigerweise wird in einem Wärmetauscher die Wärmeenergie von dem Wärmeträgermedium auf das die Turbine antreibende Medium übertragen. Vorzugsweise zirkuliert die organische Flüssigkeit in einem geschlossenen Kreislauf. Das bei der Wärmeübertragung abgekühlte Wärmeträgermedium wird anschließend bevorzugt wieder in die Zuführungsleitungen eingeleitet bzw. eingepresst. Nach besonders bevorzugter Ausführungsform der Erfindung wird also das Wärmeträgermedium, vorzugsweise Wasser, in einem geschlossenen Kreislauf geführt.

Der Erfindung liegt die Erkenntnis zugrunde, dass mit dem erfindungsgemäßen Verfahren ein sehr effektiver Wärmeaustausch bzw. eine sehr effektive Übertragung von Erdwärme auf das Wärmeträgermedium möglich ist. Mit anderen Worten ist die Wärmeausbeute bezüglich der im Erdreich auf das Wärmeträgermedium übertragenen Wärme überraschend hoch. Die hohe Wärmeausbeute kann insbesondere realisiert werden, wenn das Wärmeträgermedium über den Strömungsabstand s, d. h. von einer Austrittsöffnung zu einer Abführungsöffnung zunächst relativ langsam strömt, so dass ein effektiver Wärmeaustausch stattfinden kann. Erst in der Nähe der Abführungsöffnung bzw. der Förderleitung strömt das Wärmeträgermedium schneller und wird dann auch schnell zur Erdoberfläche abgeführt bzw. gepumpt, so dass das Wärmeträgermedium im Ergebnis eine relativ hohe Wärmemenge an die Erdoberfläche befördern kann. Fernerhin ist das erfindungsgemäße Verfahren im Vergleich zu aus dem Stand der Technik bekannten Verfahren relativ einfach und ohne großen Mehraufwand durchführbar. Von besonderem Vorteil ist fernerhin, dass im Rahmen des erfindungsgemäßen Verfahrens ein hoher Wirkungsgrad bei der Gewinnung von elektrischer Energie aus Erdwärme erreichbar ist. Hervorzuheben ist außerdem, dass die erfindungsgemäße Energiegewinnung bzw. Energieumwandlung ausgesprochen umweltfreundlich ist. Vor allem Kohlendioxidemissionen fallen bei der Nutzung von Erdwärme nicht an und somit wird bei der Anwendung des erfindungsgemäßen Verfahrens ein wesentlicher Beitrag zum Klimaschutz geleistet.

Nachfolgend wird die Erfindung anhand einer lediglich ein Ausführungsbeispiel darstellenden Zeichnung näher erläutert. Es zeigen in schematischer Darstellung:
- **Fig. 1**: einen Schnitt durch eine erfindungsgemäße Vorrichtung zur Durchführung des erfindungsgemäßen Verfahrens und
- **Fig. 2**: schematisch die Verteilung von Austrittsöffnungen und Abführungsöffnung.

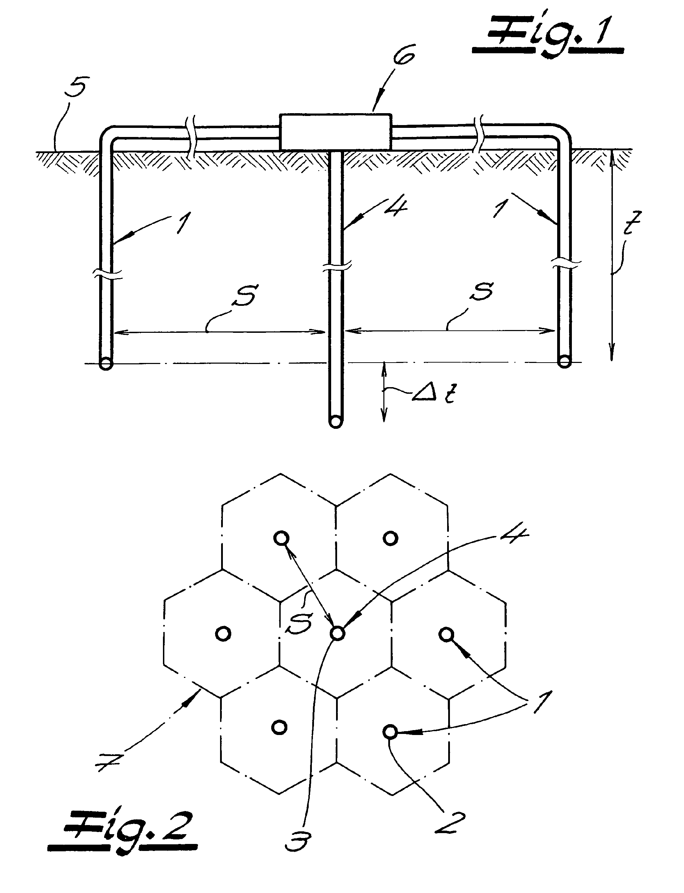

Die Figuren zeigen eine Vorrichtung zur Durchführung des erfindungsgemäßen Verfahrens zur Nutzung von Erdwärme, insbesondere zur Stromerzeugung. Ein nicht näher dargestelltes Wärmeträgermedium wird durch Zuführungsleitungen 1 in das Erdreich eingeführt. Bei dem Wärmeträgermedium handelt es sich vorzugsweise um Wasser. Erfindungsgemäß sind mehrere Zuführungsleitungen 1 um eine Förderleitung 4 herum verteilt angeordnet (Fig. 2). In einer Tiefe t, die im Ausführungsbeispiel 3500 m betragen mag, tritt dann das über die Zuführungsleitungen 1 zugeführte Wärmeträgermedium über eine Mehrzahl von Austrittsöffnungen 2 in das Erdreich aus. Vorzugsweise und im Ausführungsbeispiel ist jeder Zuführungsleitung 1 lediglich eine einzige Austrittsöffnung 2 zugeordnet. Grundsätzlich könnte eine Zuführungsleitung 1 jedoch mehrere Austrittsöffnungen 2 aufweisen. Zweckmäßigerweise und im Ausführungsbeispiel sind alle Austrittsöffnungen 2 der Zuführungsleitung 1 in derselben Tiefe t angeordnet.

Das Wärmeträgermedium strömt von den Austrittsöffnungen 2 über einen Strömungsabstand s durch das Erdreich und wird dort durch die Erdwärme gleichsam erwärmt bzw. aufgeheizt und strömt dann zu der Abführungsöffnung 3. Die Abführungsöffnung 3 befindet sich am unteren Ende einer Förderleitung 4 und durch diese Förderleitung 4 wird das erwärmte Wärmeträgermedium wieder an die Erdoberfläche 5 zurückbefördert.

In der Fig. 1 ist erkennbar, dass nach bevorzugter Ausführungsform die Abführungsöffnung 3 tiefer liegt bzw. auf einem tieferen Niveau angeordnet ist als die Austrittsöffnungen 2. Die Differenz Δt, um welche diese Abführungsöffnung 3 tiefer liegt, beträgt bei einem Strömungsabstand s von 500 m bevorzugt mindestens 50 m.

Erfindungsgemäß sind die Zuführungsleitungen 1 bzw. ihre Austrittsöffnungen 2 um die Abführungsöffnung 3 bzw. um die zugeordnete Förderleitung 4 verteilt angeordnet. In Fig. 1 ist im Übrigen erkennbar, dass sowohl die Förderleitung 4 als auch die Zuführungsleitungen 1 vertikal in das Erdreich eingebracht sind. Nach besonders bevorzugter Ausführungsform und im Ausführungsbeispiel nach Fig. 2 sind die Leitungen bzw. deren Öffnungen mit der Maßgabe angeordnet, dass die Förderleitung 4 und/oder ihre Abführungsöffnung 3 bezüglich einer (gedachten) horizontalen Schnittfläche/Schnittebene den Mittelpunkt eines mittleren Polygons 7 bildet und wobei die Zuführungsleitungen 1 und/oder ihre Austrittsöffnungen 2 jeweils den Mittelpunkt eines identischen äußeren Polygons 7 bilden. Die äußeren Polygone 7 grenzen dabei an das mittlere Polygon 7 unmittelbar an. Fig. 2 zeigt die Draufsicht auf die genannte Schnittfläche/Schnittebene und die Polygone 7 sind hier als Sechsecke ausgebildet. Mit anderen Worten bildet hier die Förderleitung 4 bzw. ihre Abführungsöffnung 3 den Mittelpunkt eines Kreises und auf dem Kreis sind die Zuführungsleitungen 1 bzw. deren Austrittsöffnungen 2 angeordnet. In Fig. 2 ist auch erkennbar, dass es im Rahmen der Erfindung liegt, dass das mittlere Polygon 7 mit der Abführungsöffnung 3 von den äußeren Polygonen 7 mit den Austrittsöffnungen 2 vollständig umgeben wird.

Das mit einer Zuführungsleitung 1 bzw. durch eine Austrittsöffnung 2 zugeführte Wärmeträgermedium durchströmt das Erdreich über den Strömungsabstand s zur Abführungsöffnung 3 bzw. zur Förderleitung 4 hin. Das über diesen Strömungsweg s durch die Erdwärme erwärmte Trägermedium wird erforderlichenfalls mit Hilfe von zumindest einer Pumpe durch die Förderleitung 4 an die Erdoberfläche 5 bzw. zu einer Stromerzeugungseinrichtung 6 befördert. In dieser Stromerzeugungseinrichtung 6 wird in nicht näher dargestellter Weise die von dem Wärmeträgermedium beförderte Wärme (Erdwärme) in mechanische Energie umgewandelt. Dazu wird die Wärme in einem Wärmetauscher zweckmäßigerweise an eine organische Flüssigkeit übertragen, die einen niedrigeren Siedepunkt besitzt als Wasser. Dadurch wird die organische Flüssigkeit verdampft und der Dampf wird bei hoher Temperatur und hohem Druck über zumindest eine Turbine geleitet. Die Turbine treibt einen Generator an, mit dem die mechanische in elektrische Energie umgewandelt wird. Das organische Medium wird bei diesem Vorgang abgekühlt und entspannt und anschließend zweckmäßigerweise wieder dem Wärmetauscher zugeführt, in der es mit Hilfe des Wärmeträgermediums erwärmt wird. Das nach dem Wärmetauscher abgekühlte Wärmeträgermedium wird anschließend wieder in Zuführungsleitungen 1 zurückgeführt, was in der Fig. 1 durch entsprechende Pfeile veranschaulicht wurde. Das Wärmeträgermedium wird somit in einem geschlossenen Kreislauf geführt.

## Patentansprüche

1. Verfahren zur Nutzung von Erdwärme, insbesondere zur Stromerzeugung,
wobei ein Wärmeträgermedium durch eine Mehrzahl von Zuführungsleitungen (1) in das Erdreich eingeführt wird,
wobei jede Zuführungsleitung (1) zumindest eine Austrittsöffnung (2) aufweist und wobei das Wärmeträgermedium über diese Austrittsöffnungen (2) in das Erdreich austritt,
wobei das Wärmeträgermedium von den Austrittsöffnungen (2) über einen Strömungsabstand s das Erdreich durchdringend zu einer Abführungsöffnung (3) geführt wird,
wobei das durch die Erdwärme erwärmte Wärmeträgermedium über eine an die Abführungsöffnung (3) angeschlossene Förderleitung (4) wieder zur Erdoberfläche zurückgeführt wird
und wobei die mehreren Zuführungsleitungen (1) bzw. ihre Austrittsöffnungen (2) um die eine Förderleitung (4) bzw. ihre Abführungsöffnung (3) verteilt angeordnet werden.

2. Verfahren nach Anspruch 1, wobei mindestens drei, vorzugsweise mindestens vier und besonders bevorzugt mindestens sechs Zuführungsleitungen (1) vorgesehen sind.

3. Verfahren nach einem der Ansprüche 1 oder 2, wobei zumindest ein Teil der Zuführungsleitungen (1) bzw. ihre Austrittsöffnungen (2), vorzugsweise alle Zuführungsleitungen (1) bzw. ihre Austrittsöffnungen (2) denselben Strömungsabstand s zur Förderleitung (4) bzw. zu ihrer Abführungsöffnung (3) haben.

4. Verfahren nach einem der Ansprüche 1 bis 3, wobei der Strömungsabstand s 200 m bis 800 m, vorzugsweise 300 m bis 700 m beträgt.

5. Verfahren nach einem der Ansprüche 1 bis 4, wobei die Leitungen mit der Maßgabe angeordnet werden, dass die Förderleitung (4) bezüglich einer horizontalen Schnittfläche den Mittelpunkt eines mittleren Polygons (7) bildet und wobei zumindest ein Teil der Zuführungsleitungen (1) jeweils den Mittelpunkt eines identischen äußeren Polygons (7) bildet, welches äußere Polygon (7) an das mittlere Polygon (7) unmittelbar angrenzt.

6. Verfahren nach Anspruch 5, wobei das mittlere Polygon (7) von den äußeren Polygonen (7) vollständig umgeben wird.

7. Verfahren nach einem der Ansprüche 5 oder 6, wobei die Polygone Sechsecke sind.

8. Verfahren nach einem der Ansprüche 1 bis 7, wobei der Innendurchmesser der Förderleitung (4) größer ist als der Innendurchmesser einer Zuführungsleitung (1).

9. Verfahren nach einem der Ansprüche 1 bis 8, wobei die Abführungsöffnung (3) um eine Tiefendifferenz Δt tiefer als die Austrittsöffnungen (2) angeordnet ist, welche Tiefendifferenz Δt zumindest 1/20 des Strömungsabstandes s beträgt.

10. Verfahren nach einem der Ansprüche 1 bis 9, wobei das Erdreich zwischen den Austrittsöffnungen (2) und der Abführungsöffnung (3) zur Erzeugung von Strömungskanälen für das Wärmeträgermedium künstlich aufgebrochen wird.
